# EUROPÄISCHE PATENTANMELDUNG

(11) **EP 0 529 550 A1**
(43) Veröffentlichungstag der Anmeldung: **03.03.1993**
(21) Anmeldenummer: 92114361.6
(22) Anmeldetag: 22.08.1992
(51) Int. Cl.: H01M 8/24

(54) **Brennstoffzellenanordnung**

(30) Priorität: 28.08.1991 DE 4128515
(71) Anmelder: ABB PATENT GmbH, D-68309 Mannheim (DE)
(72) Erfinder: Wetzko, Manfred, Dr., W-6905 Schriesheim (DE); Rohr, Franz-Jozef, Dr., W-6941 Abtsteinach (DE)
(74) Vertreter: Rupprecht, Klaus, Dipl.-Ing.

(57) **Zusammenfassung**

Die Erfindung bezieht sich auf eine Brennstoffsellenanordnung mit einem gasdichten keramischen Träger (1), der durch U-förmige Vertiefungen gestaltete offene Kanäle (5) aufweist. Durch Abdeckung mit Brennstoffsellen (2) sind die Kanäle (5) zu Luftführungskanälen geschlossen, wobei eine gute Luftzufuhr zu den am Luftstrom liegenden Luftelektroden der Brennstoffzellen (2) gewährleistet ist.

## Beschreibung

Die Erfindung bezieht sich auf eine Brennstoffzellenanordnung mit mehreren flachen Brennstoffzellen, die auf einem gasdichten keramischen Träger befestigt sind.

Solche Brennstoffzellenanordnungen können als Module in Brennstoffzellenbatterien zur elektrochemischen Energieumwandlung eingesetzt werden.

Aus dem Stand der Technik sind sowohl Brennstoffzellenanordnungen mit einem porösen gasdurchlässigen keramischen Träger bekannt, wie auch Anordnungen mt einem gasdicht gesinterten Träger. Der Träger dient als Gerüst für mehrere vorgefertigte flache Brennstoffzellen. Die Brennstoffzellen bestehen jeweils aus einer plättchenförmigen gesinterten Zirkonoxidfolie als Festelektrolyt mit auf einer ersten Hauptfläche als Kathodenelektrode aufgebrachter leitfähiger Perowskitschicht und auf der zweiten Hauptfläche als Anodenelektrode aufgebrachter Ni-Cermet-Schicht. Außerdem Zirkonoxidfolie als Festelektrolyt mit auf einer ersten Hauptfläche als Kathodenelektrode aufgebrachter leitfähiger Perowskitschicht und auf der zweiten Hauptfläche als Anodenelektrode aufgebrachter Ni-Cermet-Schicht. Außerdem dient der Träger mit Hilfe integrierter Gaskanäle zur Zuführung eines der Reaktionsgase, meistens Luft, zur Kathodenelektrode der Brennstoffzellen.

Eine Anordnung mit einem porösen keramischen Träger ist in der DE-OS 40 33 284 angegeben. Per poröse Träger ermöglicht durch seine Poren einen Zutritt von Luft zur Kathodenelektrode. Allerdings haben poröse Träger auch Nachteile, insbesondere wenn der Träger durch Extrusion hergestellt wird. Um Gasdurchlässigkeit zu erzielen, müssen nämlich der Extrusionsmasse Porenbildner zugesetzt werden, die die Extrusion beeinträchtigen und zu einer geringen mechanischen Festigkeit des Trägers führen. Außerdem muß der Träger an einigen, nicht von Brennstoffzellen bedeckten Stellen abgedichtet werden, um einen Kontakt des ersten Reaktionsgases, z.B. Luft, mit dem zweiten Reaktionsgas, dem Brenngas, zu vermeiden.

Eine ähnliche Anordnung mit porösem Träger und innerem Gaskanälen ist in der EP 04 52 737 A1 beschrieben. Dort ist in Spalte 2 der Beschreibung auch die Herstellung des porösen Trägers durch Extrusion unter Verwendung einer Extrusionsmasse, der ein Porenbildner zugesetzt ist, erwähnt. Am Ende der Beschreibung ist auf die notwendige Abdichtung des Trägers hingewiesen.

In der nicht vorveröffentlichten deutschen Patentanmeldung P 41 04 841.5 ist deshalb vorgeschlagen worden, einen gasdicht gesinterten keramischen Träger zu verwenden, der in einem von Kathodenelektroden bedeckten Bereich eine Vielzahl von kleinen Kanälen für einen Luftdurchtritt durch die Trägerwand aufweist. Bei einer solchen Ausführung des Trägers besteht jedoch das Problem, daß die Kathodenschichten der Brennstoffzellen über die als Löcher oder Schlitze ausgeführten kleinen Kanäle möglicherweise nicht ausreichend mit Luft versorgt werden, zumal keine Zwangsströmung an der Kathodenschicht entlang realisiert werden kann.

Davon ausgehend liegt der Erfindung die Aufgabe zugrunde, eine verbesserte Brennstoffzellenanordnung mit auf einem gasdichten keramischen Träger angeordneten Brennstoffzellen anzugeben.

Diese Aufgabe wird gelöst durch eine Brennstoffzellenanordnung mit mehreren flachen Brennstoffzellen, die auf einem gasdichten keramischen Träger befestigt sind, wobei der Träger wenigstens einen zu einer Hauptfläche hin ganzflächig offenen Kanal aufweist, der durch die Brennstoffzellen abgedeckt ist.

Die erfindungsgemäße Anordnung ermöglicht einen ungehinderten Kontakt zwischen der Brennstoffzellen-Kathodenelektrode und der Luft in ihrem Hauptstrom durch den Kanal im Träger. Die Brennstoffzellen stellen einen Teil der Wandung des Luftkanals dar, wodurch für den Träger nur ein geringer Materialaufwand erforderlich ist. Vorteilhafte Ausgestaltungen, insbesondere eine dachziegelartig überlappende Anordnung der Brennstoffzellen, sind der nachstehenden näheren Beschreibung der Erfindung anhand von in der Zeichnung dargestellten Ausführungsbeispielen zu entnehmen.

Es zeigen:
- Figur 1: keramischen Träger mit einer Brennstoffzelle,
- Figur 2: Schnitt durch einen keramischen Träger mit dachziegelartig überlappend angeordneten Brennstoffzellen,
- Figur 3a, 3b: schematische Darstellung einer Brennstoffzellenanordnung mit an einer Stirnseite geschlossenem Träger.

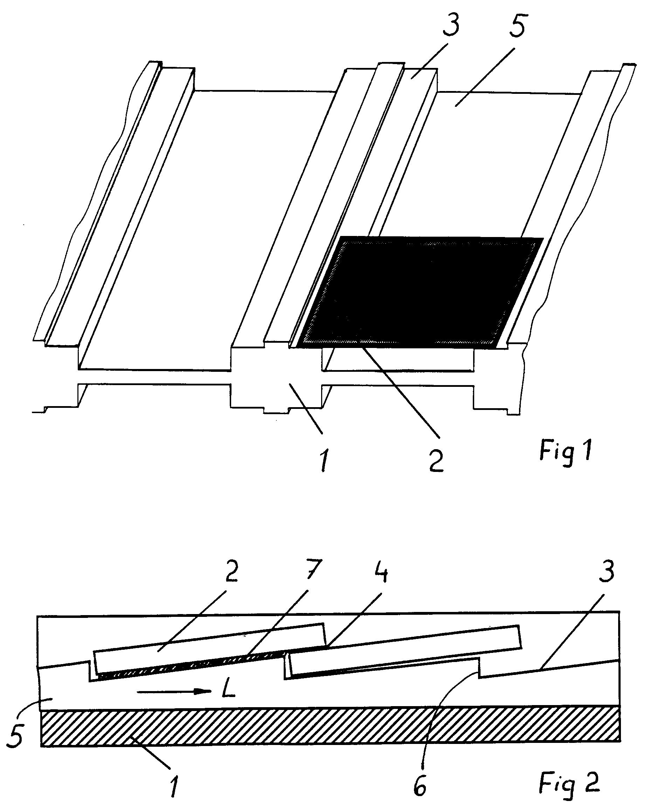

Figur 1 zeigt eine erfindungsgemäße Brennstoffzellenanordnung mit einem gasdichten keramischen Träger 1 zur Aufnahme mehrerer flacher Brennstoffzellen 2, wovon in der Zeichnung nur eine Brennstoffzelle gezeigt ist. Der Träger 1 kann z.B. durch Extrusion einer Masse aus keramischem Pulver mit Extrusionszusätzen als Grünkörper hergestellt und anschließend gasdicht gesintert werden. Die Brennstoffzellen 2 sind jeweils aus einer Festelektrolytscheibe mit ausreichender mechanischer Festigkeit und Gasdichtigkeit hergestellt, die mit elektrisch leitenden Elektrodenschichten, z.B. durch Siebdrucken oder Plasmaspritzen. versehen ist. Die Brennstoffzellen 2 sind z.B. mit Hilfe eines keramischen Klebers, eines Glaslots oder eines Isolationswerkstoffs mit einem Auflagebereich 3 des Trägers 1 verbunden. Eine gasdichte elektrische Verbindung von Brennstoffzellen 2 untereinander zur Herstellung einer elektrischen Reihenschaltung ist mit Hilfe eines Interkonnektors 4 (siehe Figur 2) aus einem elektrisch leitenden Verbindungsmaterial hergestellt. Dieses Verbindungsmaterial kann auch als Kleber zur Verbindung von Brennstoffzellen 2 mit dem Träger 1 verwendet werden.

Der Träger 1 weist einen oder vorzugsweise mehrere durch U-förmige Vertiefungen gebildete offene Kanäle 5 auf. Ein solcher offener Kanal 5 wird durch mehrere Brennstoffzellen 2 abgedeckt, so daß ein geschlossener Kanal zur Zuführung von z.B. Luft als Reaktionsgas entsteht.

Der in Figur 1 dargestellte Träger 1 ist symmetrisch ausgeführt, so daß auch auf seiner Rückseite Kanäle 5 vorhanden sind, die durch nicht gezeichnete Brennstoffzellen 2 abgedeckt sind.

Eine bevorzugte Anordnung von Brennstoffzellen 2 auf dem Träger 1 ist in Figur 2 dargestellt, die einen Schnitt durch einen Träger 1 zeigt, der einen Auflagebereich 3 mit sägezahnartigen Vertiefungen 6 aufweist. Auch diese Anordnung kann symmetrisch, also auch mit auf der Rückseite liegenden Kanälen 5, ausgeführt sein, entsprechend der in Figur 1 gezeigten Ausführung.

Die Brennstoffzellen 2 sind dachziegelartig überlappend in die sägezahnartige Vertiefungen 6 der Auflagebereiche 3 des Trägers 1 eingelegt und mit Hilfes eines Interkonektors elektrisch in Reihe geschaltet. Die Brennstoffzellen 2 bilden zusammen mit dem Träger 1 einen Kanal zur Führung von Luft L. Diese dachziegelartige Anordnung von Brennstoffzellen ist aus der DE-OS 40 33 284 an sich bereits bekannt, jedoch in Verbindung mit einem porösen Träger. In Verbindung mit der erfindungsgemäßen Trägergestaltung führt diese Anordnung von Brennstoffzellen zu einer besonders einfachen Montage. Das Interkonnektormaterial kann zugleich als Kleber 7 verwendet werden, wodurch sich die Montage und die Abdichtung vereinfacht.

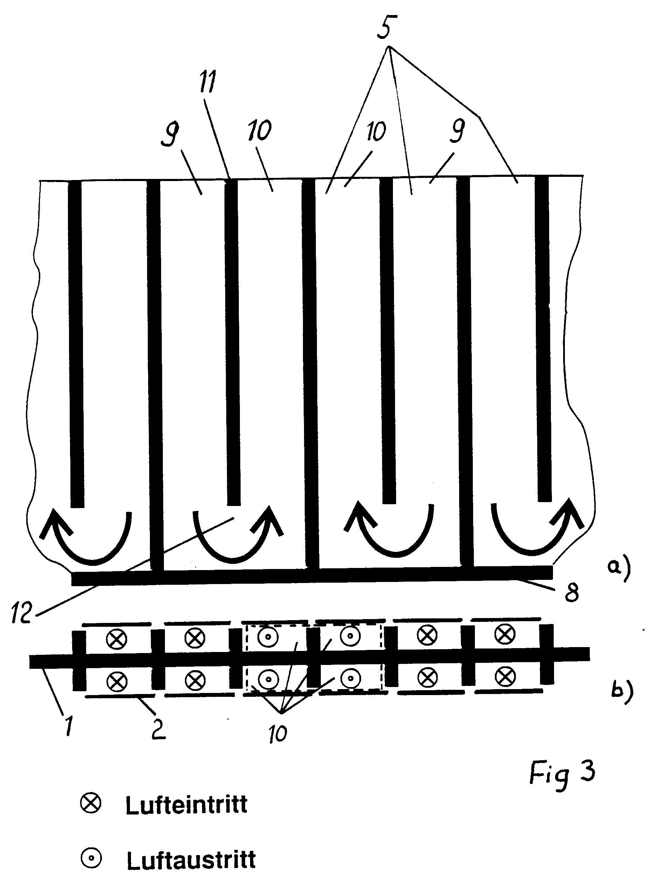

In Figur 3 ist schematisch eine weitere vorteilhafte Ausgestaltung dargestellt, wobei Figur 3a einen Schnitt durch einen Träger 1 mit einer ersten, durch eine Stirnwand 8 geschlossene Stirnseite zeigt, und Figur 3b eine Draufsicht auf die zweite, offene Stirnseite des Trägers 1.

Die Kanäle 5 sind entweder als Gashinführungskanäle 9 oder als Gasrückführungskanäle 10 genutzt, wobei jeweils eine zwischen Gashin- und -rückführungskanälen 9, 10 liegende Trägerwand 11 eine Öffnung 12 vor der Stirnwand 8 aufweist. Durch Pfeile ist die jeweilige Luftströmungsrichtung angegeben. Es wird mit dieser Anordnung erreicht, daß ohne zusätzliche in die Kanäle einzusetzende Rohre eine Luftzu- und -abfuhr von einer Seite, also z.B. von oben her möglich ist. Es kann außerdem eine Nutzung der Kanäle 5 als Hinund Rückführungskanäle 9, 10 in solcher Weise erfolgen, daß jeweils zwei Zuführkanäle 9 und zwei Rückführkanäle 10 nebeneinanderliegen. Eine entsprechende Nutzung der Kanäle 5 kann auch auf der Rückseite des Trägers 1 vorgesehen werden, so daß vier Kanäle 5 mit gleicher Luftströmungsrichtung aneinandergrenzen und, wie in Figur 3b durch gestrichelte Linien angedeutet ist, zu einem gemeinsamen Luftanschluß zusammengefaßt werden können. Damit wird auch die Gestaltung der in Brennstoffzellenbatterien erforderlichen Gasverteileranschlüsse vereinfacht und es werden Abdichtprobleme verringert.

Die einfache Form des Trägers erlaubt durch Änderung der Wanddicken auf einfache Weise eine Anpassung an die jeweilige Festigkeitsanforderungen. Der Kanalquerschnitt kann ebenfalls problemlos optimiert werden, da kein minimaler Rohrdurchmesser zu beachten ist. Diese Optimierungsmöglichkeiten führen zu einer erheblichen potentiellen Materialeinsparung.

### Bezugszeichenliste

- 1: keramischer Träger
- 2: Brennstoffzelle
- 3: Auflagebereich
- 4: Interkonnektor
- 5: offener Kanal
- 6: sägezahnartige Vertiefung
- 7: Kleber
- 8: Stirnwand
- 9: Gashinführungskanal
- 10: Gasrückführungskanal
- 11: Trägerwand
- 12: Öffnung

## Patentansprüche

1. Brennstoffzellenanordnung mit mehreren flachen Brennstoffzellen, die auf einem gasdichten keramischen Träger befestigt sind, dadurch gekennzeichnet, daß der Träger (1) wenigstens einen zu einer Hauptfläche hin ganzflächig offenen Kanal (5) aufweist, der durch die Brennstoffzellen (2) abgedeckt ist.

2. Brennstoffsellenanordnung nach Anspruch 1, dadurch gekennzeichnet, daß der Träger (1) in einem Auflagebereich (3) der Brennstoffzellen (2) sägezahnartige Vertiefungen (6) aufweist und mehrere Brennstoffzellen (2) dachziegelartig überlappend montiert und zur Herstellung einer elektrischen Reihenschaltung kontaktiert sind.

3. Brennstoffzellenanordnung nach Anspruch 1 oder 2, dadurch gekennzeichnet, daß
a) der Träger (1) an einer ersten Stirnseite mit einer Stirnwand (8) geschlossen ist und
b) jeweils ein Gashinführungskanal (9) und ein daneben liegender Gasrückführungskanal (10) einen durchgehenden Gaskanal bilden, wobei in einer Trägerwand (11) zwischen den Gashin- und -rückführungskanälen (9,10) im Bereich der geschlossenen Stirnwand (8) eine Öffnung (12) für den Gasdurchtritt vom Hinführungskanal (9) zum Rückführungskanal (10) vorhanden ist.

4. Brennstoffzellenanordnung nach einem der vorstehenden Ansprüche, dadurch gekennzeichnet, daß der Träger (1) sowohl auf seiner Vorderseite wie auch auf seiner Rückseite offene Kanäle (5) aufweist, die durch Brennstoffzellen (2) abgedeckt sind.

5. Brennstoffzellenanordnung nach Anspruch 3, dadurch gekennzeichnet, daß die Kanäle so abwechselnd als Gaszuführungskanal (9) und Gasrückführungskanal (10) genutzt sind, daß zwei Kanäle mit gleicher Gasströmungsrichtung aneinandergrenzen.

6. Brennstoffzellenanordnung nach Anspruch 4, dadurch gekennzeichnet, daß die Kanäle so abwechselnd als Gaszuführungskanal (9) und Gasrückführungskanal (10) genutzt sind, daß vier Kanäle mit gleicher Gasströmungsrichtung aneinandergrenzen.
